# EUROPÄISCHE PATENTSCHRIFT

(11) **EP 1 817 813 B1**
(45) Veröffentlichungstag und Bekanntmachung des Hinweises auf die Patenterteilung: **07.04.2010**
(21) Anmeldenummer: 05821724.1
(22) Anmeldetag: 09.12.2005
(51) Int. Cl.: H01M 8/06

(54) **BRENNSTOFFZELLENHEIZGERÄT SOWIE VERFAHREN ZUM BETREIBEN EINES BRENNSTOFFZELLENHEIZGERÄTS**
FUEL CELL HEATING DEVICE AND METHOD FOR OPERATING SAID FUEL CELL HEATING DEVICE
APPAREIL DE CHAUFFAGE A PILE A COMBUSTIBLE ET PROCEDE POUR FAIRE FONCTIONNER UN TEL APPAREIL

(30) Priorität: 10.12.2004 DE 102004059495
(43) Veröffentlichungstag der Anmeldung: 15.08.2007
(73) Patentinhaber: BAXI INNOTECH GmbH, 20539 Hamburg (DE)
(72) Erfinder: SCHILLING, Lutz, 70374 Stuttgart (DE); KLOSE, Philipp, 22769 Hamburg (DE); HOFFMANN, Christian, 22119 Hamburg (DE)
(74) Vertreter: Schildberg, Peter
(86) Internationale Anmeldenummer: PCT/EP2005/013247
(87) Internationale Veröffentlichungsnummer: WO 2006/061245

(56) Entgegenhaltungen:
- EP-A- 1 513 207
- WO-A-03/094273
- US-A1- 2003 138 680

## Beschreibung

Die vorliegende Erfindung betrifft ein Verfahren zum Betreiben eines Brennstoffzellenheizgeräts, insbesondere ein Verfahren zum An- und Abfahren einer Gasaufbereitungseinheit in dem Brennstoffzellenheizgerät.

Brennstoffzellen, wie beispielsweise Polymermembran-Brennstoffzellen sind hinreichend bekannt. Brennstoffzellenheizgeräte zur dezentralen Energieversorgung werden über einen Gasanschluß mit Erdgas versorgt, wobei der Wasserstoff aus wasserstoffhaltigen Verbindungen des Erdgases reformiert wird. In einer Gasaufbereitungseinheit, die einen Reformer enthält, werden in Anwesenheit eines Katalysators die Kohlenwasserstoffe (CₙHₘ) des Erdgases endotherm unter Zugabe von Wasserdampf reformiert, wobei Kohlendioxid (CO₂) und Wasserstoff (H₂) entsteht. Das Reformat enthält auch Reste von Kohlenmonoxid (CO), welches in einer nachgeschalteten Gasfeinreinigung unter Zugabe von Sauerstoff exotherm selektiv oxidiert wird. Dabei entsteht Kohlendioxid (CO₂) und Wasser (H₂O). Für die endotherme Dampfreformation wird ein Gasbrenner eingesetzt.

Aus DE 200 00 857 U1 ist ein Brennstoffzellensystem bekannt, das in einer Zuleitung zu einer Brennstoffzelle mit einem elektrisch betätigbaren Drei-Wege-Ventil ausgestattet ist. Die Zuleitung ist ferner mit einem Sensor versehen, der in der Zuleitung zur Brennstoffzelle eine Kohlenmonoxidkonzentration bestimmt. Bei Überschreiten eines vorbestimmten Schwellwerts für das Kohlenmonoxid wird dieses durch ein entsprechendes Ansteuern des Drei-Wege-Ventils an einem Eintritt in die Brennstoffzelle gehindert. Das Gas wird in einer Umgehungsleitung an der Brennstoffzelle vorbeigeleitet. Das vorbeigeführte Gas wird in einem Brenner für den Reformer und den Verdampfer verbrannt. Alternativ ist ebenfalls möglich, dass zum weiteren Absenken der Kohlenmonoxidkonzentration ein zweiter Durchlauf des Gases durch die Anordnung erfolgt. Die zweite Aufbereitung des Gases dient dazu, den Kohlenmonoxidgehalt weiter zu senken.

Aus DE 102 52 075 A1 ist eine gestufte magere Verbrennung für einen Schnellstart eines Brennstoff verarbeitenden Systems bekannt. Hierzu sind zwei unabhängige Brennersysteme bekannt. Hierzu wird der Ausgangsstrom des zweiten Brennersystems dem Wärmetauscher eines Wasser-Gas-Shift-Reaktors/Wärmetauschers (WGS/WT) zugeführt. Aus dem Wärmetauscher wird das Gas als Abgas fortgeführt. Hierbei bleibt das Gas des zweiten Brenners stets von dem Gas getrennt, das durch den Shiftreaktor in die Prox-Stufe geleitet wird.

Die Reformierung erfolgt typischerweise bei Temperaturen von 500°C bis 800°C. Der Katalysator des Reformers darf nicht mit Sauerstoff in Verbindung gelangen, da er sonst beschädigt wird oder so stark oxidiert, daß die gewünschte Katalysatorwirkung nicht mehr erreicht wird. Neben der Beschädigung des Reformers durch Sauerstoff kann der Reformer auch durch auskondensierendes Wasser beschädigt werden oder vorzeitig altern.

Es besteht daher das Bedürfnis, daß der Katalysator im Reformer nicht einer undefinierten Atmosphäre ausgesetzt und ein Auskondensieren von Wasserdampf vermieden wird.

Hierzu ist bekannt, das Brennstoffzellenheizgerät mit einem Inertgas zu spülen, insbesondere beim Ab- und Anfahren des Brennstoffzellenheizgeräts. Bisher wird hierzu bevorzugt Stickstoff eingesetzt, der aus einem oder mehreren separaten Vorratsbehältern in die Anlage gepumpt bzw. aus der Anlage herausgepumpt wird.

Aus US 2003/0138680 ist ein Brennstoffzellenheizgerät bekannt, das dafür ausgelegt ist, um beim An- und Abfahren ein Systemgas wie beispielsweise Reformat, Anodenabgase und/oder Verbrennungsabgase durch die Gasaufbereitung zirkulieren zu lassen. Hierzu ist ein separater katalytischer Brenner vorgesehen, über den der zirkulierende Gasstrom geführt wird. Dem regulären Betrieb läuft kein Gasstrom über den separaten katalytischen Brenner, sondern die Brennstoffzelle wird über eine reguläre Prox-Stufe versorgt.

Das Verfahren gemäß Anspruch 1 unterscheidet sich von dem bekannten Brennstoffzellenheizgerät dadurch, daß keine zusätzliche Komponenten für die An- und Abfahrtphase vorgesehen sind.

Der Erfindung liegt die technische Aufgabe zugrunde, ein Verfahren zum Betrieb eines Brennstoffzellenheizgeräts bereitzustellen, das mit möglichst einfachen Mitteln eine Gasaufbereitungseinheit sicher und schonend für deren Bauteile betreibt.

Das erfindungsgemäße Brennstoffzellenheizgerät besitzt eine Gasaufbereitungseinheit, die eine Eingangsleistung für Gas und eine Ausgangsleitung für wasserstoffhaltiges Reformat besitzt. In der Gasaufbereitungseinheit werden Kohlenwasserstoff (CₙHₘ) unter Zugabe von Wasserdampf zu Kohlendioxid (CO₂) und Wasserstoff (H₂) umgewandelt. Erfindungsgemäß ist bei dem Brennstoffzellenheizgerät eine Zirkulationsleitung vorgesehen, die Eingangsleitung und Ausgangsleitung miteinander verbindet. Die Zirkulationsleitung ermöglicht es, die Ausgangsprodukte der Gasaufbereitungseinheit dieser wieder zuzuführen, wodurch eine definierte Gasmenge in der Gasaufbereitungseinheit zirkuliert. Die Gasaufbereitung besitzt einen Reformer und eine nachgeordnete Gasfeinreinigung. Die Gasfeinreinigung ist hierbei bevorzugt in der Ausgangsleitung der Gasaufbereitungseinheit zwischen Reformer und dem Ventil vorgesehen. Das über die Zirkulationsleitung zurückgeführte Gas hat die Gasaufbereitungseinheit also vollständig durchlaufen. Durch das Zurückführen der Gasmenge an die Gasaufbereitungseinheit kann bei Zufuhr von Luft und unter Abscheiden von Wasser ein inertes Gas aus Reformat hergestellt werden. Erfindungsgemäß ist die Zirkulationsleitung mit der Ausgangsleitung über mindestens ein Ventil verbunden, das die Zirkulationsleitung mit der Ausgangsleitung der Gasaufbereitungseinheit verbindet. Die Verwendung des Ventils erlaubt es, eine Gasmenge über die Zirkulationsleitung im Kreis zu führen und dabei die Gaszufuhr zur Brennstoffzelle zu unterbinden. Hierbei kann ein Drei-Wege-Ventil, ein Paar von Ventilen oder eine sonstige Anordnung von Ventilen in der Leitung angeordnet sein. Bei der Erfindung wird die Gasfeinreinigung sowohl in der Aufwärmphase, in der das Reformat zirkuliert, eingesetzt als auch in der regulären Betriebsphase, in der das Reformat der Brennstoffzelle zugeführt wird.

Die Gasaufbereitungseinheit besitzt als Gasfeinreinigung bevorzugt eine Oxidationseinheit. In der Gasfeinreinigung wird unter Zugabe von Luft Kohlenmonoxid zu Kohlendioxid und Wasser umgesetzt. Im Prozeß der Gasaufbereitung wird der Gasaufbereitungseinheit ebenfalls Luft zugeführt.

Die technische Aufgabe der Erfindung wird durch ein Verfahren zum Betreiben eines Brennstoffzellenheizgeräts mit den Merkmalen aus Anspruch 1 gelöst. Vorteilhafte Ausgestaltungen des Verfahrens bilden die Gegenstände der Unteransprüche.

Das erfindungsgemäße Verfahren greift während des An- oder Abfahrens einer Gasversorgungseinheit ein. Während dieser Phasen wird Gas von der Ausgangsleitung der Gasaufbereitungseinheit wieder deren Eingangsleitung zugeführt, wobei hier insbesondere auch die Zufuhr der Edukte abgeschaltet wird. Beim Abfahren oder Herunterfahren der Gasaufbereitungseinheit zirkuliert das Gas durch die Gasaufbereitungseinheit, bis sich ein inertes Gas gebildet hat. Hierbei zirkuliert unter Zugabe von Luft eine Gasmenge in der Gasaufbereitungseinheit, bis sich das inerte Gas in der Gasaufbereitungseinheit gebildet hat. Die Erzeugung von inertem Gas erfolgt dabei unter Luftzufuhr. Das inerte Gas besteht im wesentlichen aus Kohlendioxid und Stickstoff.

Beim Anfahren des Brennstoffzellenheizgeräts wird das Inertgas in der Gasaufbereitungsanlage unter Wärmezufuhr zirkuliert. Hierdurch wird eine gleichmäßige Erwärmung des Reformers erreicht, wodurch die Kondensation von Wasserdampf und die Beschädigung des Katalysators in der Gasaufbereitungsanlage vermieden werden kann. Bei Erreichen einer vorbestimmten Temperatur in der Gasaufbereitungsanlage wird Wasser zugeführt. In einer bevorzugten Weiterbildung des Verfahrens wird nach der Zufuhr von Wasser die Ausgangsleitung hin zu einer Eingangsleitung zu einem Reformbrenner geöffnet. Das Inertgas wird somit dem Brenner zugeführt. Alternativ kann die Ausgangsleitung der Gasaufbereitung auch der Brennstoffzelle zugeführt werden.

Eine bevorzugte Ausgestaltung für ein Brennstoffzellenheizgerät wird nachfolgend näher erläutert.

Dem Brennstoffzellenheizgerät 10 wird über eine Zuleitung Prozeßgas zugeführt. Das Prozeßgas wird über die Leitung 14 einem Reformer 16 zugeführt. Das Reformat aus dem Reformer 16 wird über eine Leitung 18 einer PrOx-Stufe 20 zugeführt. In der PrOx-Stufe 20 erfolgt eine Zufuhr von Luft 22, und über einen Wasserabscheider 24 wird das gebildete Wasser abgeführt. Das in der PrOx-Stufe 20 gebildete Gas wird über eine Leitung 26 über ein Drei-Wege-Ventil 28 und für das entsprechend gestellte Drei-Wege-Ventil der Brennstoffzelle 32 über die Leitung 30 zugeführt.

Das an der Brennstoffzelle 32 austretende Gas wird über eine Leitung 34 einer Leitung 36 zugeführt. Die Leitung 36 mündet in einem Brenner 38, der die Prozeßwärme für den Reformer 16 bereitstellt. Von der Leitung 36, die die Ausgangsleitung für die Gasaufbereitungseinheit bildet, zweigt eine Zirkulationsleitung 40 ab, die Leitung 36 mit der Eingangsleitung 16 für den Reformer verbindet. Die Zirkulationsleitung 40 ist über ein Drei-Wege-Ventil 37 an die Leitung 36 geschlossen. Das Drei-Wege-Ventil 37 erlaubt die Zirkulation einer Gasmenge unter Einbeziehung der Brennstoffzelle 32.

In der Zirkulationsleitung 40 kann zusätzlich eine Zirkulationspumpe 42 vorgesehen sein, die einen Gasstrom durch den Zirkulationskreis fördert. Der Zirkulationskreis wird von der Leitung 40 gebildet, die über Leitung 14 in den Refonner 16 führt und über Leitung 18 in die PrOx-Einheit 20 über Leitung 26 und Drei-Wege-Ventil 28 mit Leitung 36 und Drei-Wege-Ventil 37 sich dann wieder schließt.

Die Reformierung erfolgt typischerweise bei Temperaturen von 500°C bis 800°C. Der Katalysator des Reformers darf dabei im allgemeinen nicht mit Sauerstoff in Verbindung gelangen, da der Sauerstoff entweder den Katalysator beschädigt oder diesen stark oxidiert. Solange Reformat produziert wird, ist der Reformer mit dem Prozeßgas gefüllt, so daß eine unkritische Atmosphäre vorliegt. Eine ebenfalls unkritische Atmosphäre bildet sich, wenn Wasser 44 dem Reformer 16 als Wasserdampf zugeführt wird. Hierbei muß sichergestellt sein, daß das Wasser nicht auskondensiert, da dies ebenfalls zur Beschädigung oder vorzeitigen Alterung des Katalysators führt.

Der Katalysator soll beim Betrieb des Brennstoffzellenheizgeräts keiner undefinierten Atmosphäre ausgesetzt sein und Wasser sowie verbleibendes brennbares Refonnat sollen aus der Anlage entfernt werden. Im normalen Betriebszustand wird die Anlage über den Brenner 38 mit Prozeßwärme versorgt. Zudem werden dem Reformer 16 die Edukte Wasser 44 und Kohlenwasserstoff (CₙHₘ) beispielsweise durch Erdgas zugeführt. Bei Temperaturen von 500°C bis 800°C wird das Erdgas reformiert, wobei sich im wesentlichen H₂ und CO₂ bilden. Ebenfalls ist Restmethan von einigen Prozent im Reformat enthalten, da kein vollständiger Umsatz von Erdgas stattfindet. Das Reformat ist befeuchtet, da insgesamt mehr Wasser in die Anlage zugegeben wird, als für den Reformierungsprozeß benötigt wird.

Als unerwünschtes Nebenprodukt ist ebenfalls CO im Reformat enthalten, welches den Betrieb der Brennstoffzelle negativ beeinflussen kann. Um das CO zu entfernen, wird das Reformat in eine sogenannte PrOx-Stufe geleitet. Dort wird durch Zuführen von Luft-sauerstoff und unter Anwesenheit eines Katalysators bevorzugt CO in CO₂ und Wasser umgesetzt. Dieser Vorgang wird auch als präferenzielle Oxidation bezeichnet. In einer Nebenreaktion wird aber hierbei auch H₂ mit O₂ zu Wasser umgesetzt. Der CO-Gehalt ist nach der PrOx typischerweise auf wenige ppm reduziert, so daß das Gas der Brennstoffzelle zugeführt werden kann.

Beim Abfahren der Anlage, wenn also die Anlage ausgeschaltet oder in Bereitschaft gehalten wird, wird die Zuführung der Edukte Wasser und Erdgas in den Reformer gestoppt und die Zufuhr von Prozeßwärme beendet. Gleichzeitig wird der Gasfluß vor der Brennstoffzelle an dem Drei-Wege-Ventil 28 umgeleitet und in die Zirkulationsleitung 40 gelenkt. Von dort aus wird es der Zuleitung 14 für den Reformer zugeführt. Für die Umwälzung des Gases kann entweder die Eduktpumpe 43 verwendet werden oder aber auch eine separate Zirkulationspumpe 42, die in die Leitung 40 integriert ist. Alternativ können auch beide Pumpen vorgesehen sein.

Das verbleibende Reformat wird über die Zirkulationsleitung 40 durch die Gasaufbereitungseinheit mit Reformer 16 und PrOx-Stufe 20 zirkuliert. Dabei wird in der PrOx-Stufe 20 Luft zugeführt. Der Sauerstoff O₂ in der Luft reagiert mit dem H₂ des Zirkulationsgases zu Wasser. Dieses Wasser wird durch einen Wasserabscheider 24 von der PrOx abgeführt. Das Zirkulationsgas kann nicht durch den Wasserabscheider entweichen.

Das im Reformat vorhandene Restmethan wird im Reformer mit Restwasser weiter in H₂ und CO₂ umgesetzt, bis sich ein Gleichgewicht einstellt und kein weiteres Restmethan umgesetzt wird. Die Versorgung mit der benötigten Prozeßwärme ist durch den Speichereffekt des Reformers noch lang genug gegeben.

Durch das permanente Zirkulieren in der Gasaufbereitungseinheit und das Zuführen von Luft aus der PrOx wird H₂ aus dem Reformat fast vollständig in H₂O umgewandelt. Des weiteren reichert sich der verbleibende Stickstoff im Zirkulationsgas an. Nach einigen Minuten setzt sich das Zirkulationsgas im wesentlichen nur noch aus Kohlendioxid (CO₂) und Stickstoff (N₂) zusammen sowie aus geringen Mengen von Methan (CH₄) und Wasserstoff (H₂).

Für den Katalysator des Reformers gewährleistet diese Atmosphäre den notwendigen Schutzeffekt. Gleichzeitig wird durch dieses Verfahren auch überschüssiges Wasser aus der Anlage entfernt, was die Lebensdauer des Katalysators verlängert.

Beim Anfahren der Gasaufbereitungseinheit liegt aus dem letzten Abfahrzyklus, der oben beschrieben wurde, eine Inertgasatmosphäre aus Kohlendioxid (CO₂) und Stickstoff (N₂) vor. Diese schützt den Katalysator des Reformers 16 während des Aufwärmens vor einer unerwünschten Oxidation.

Beim Anfahren des Systems wird das inerte Gas in gleicher Weise in der Anlage zirkuliert wie beim Abfahren. Das heißt, das inerte Gas läuft über die Zirkulationsleitung 40 in den Reformer zurück. Die Luftzufuhr 22 der PrOx-Stufe 20 ist während des Anfahrens gesperrt.

Ein positiver Effekt der Zirkulation während des Anfahrens besteht darin, daß eine bessere Verteilung der Prozeßwärme in der Gasaufbereitungseinheit und dem Reformer erzielt wird. Sobald der Kondensationspunkt von Wasser in dem Reformer überschritten ist, kann das Edukt Wasser dem Reformer zugeführt werden. Gleichzeitig kann der Zirkulationskreis Richtung Reformer/Brenner geöffnet werden. Der entstehende Wasserdampf verdrängt nun das inerte Gas aus der Gasaufbereitungseinheit und führt es dem Brenner zu. Dabei ist es auch möglich, den Zirkulationskreis nicht direkt zum Brenner zu öffnen, sondern das inerte Gas über die Brennstoffzelle in den Brenner zu leiten.

Der Brenner wird während des Anfahrens mit Brenngas versorgt, welches typischerweise Erdgas ist. Wird nun das verdrängte Inertgas auf den Brenner gegeben, fmdet eine Verdünnung der benötigten Brennluft statt. Dem wird entgegengewirkt, indem der Brenner in einem höheren Luftzahlbereich betrieben wird, als für eine saubere Verbrennung nötig ist.

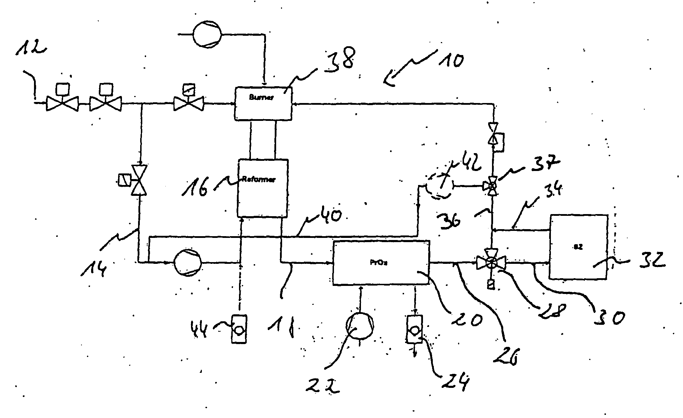

## Patentansprüche

1. Verfahren zum Betreiben eines Brennstoffzellenheizgeräts, das folgendes aufweist:
während des An- und Abfahrens einer Gasaufbereitungseinheit zirkuliert eine Gasmenge in der Gasaufbereitungseinheit, wobei das Gas von der Ausgangsleitung (36) der Gasaufbereitungseinheit der Eingangsleitung (14) der Gasaufbereitungseinheit zugeführt wird, wobei die zirkulierende Gasmenge in der Gasaufbereitungseinheit durch eine Gasfeinreinigung läuft, die über ein Ventil (28) mit der Ausgangsleitung (36) und mit einer Brennstoffzelle (32) verbunden ist, **dadurch gekennzeichnet, daß** beim Anfahren der Gasaufbereitungsanlage ein inertes Gas, das durch Umsetzen des zirkulierenden Reformats gewonnen wird, in der Gasaufbereitungsanlage unter Wärmezufuhr zirkuliert.

2. Verfahren nach Anspruch 1, **dadurch gekennzeichnet, daß** beim Abfahren der Gasaufbereitungsanlage unter Zugabe von Luft Reformat in der Gasaufbereitungseinheit zirkuliert, bis sich ein inertes Gas in der Gasaufbereitungseinheit gebildet hat.

3. Verfahren nach Anspruch 2, **dadurch gekennzeichnet, daß** das sich bei der Luftzufuhr bildende Wasser abgeführt wird.

4. Verfahren nach Anspruch 2 oder 3, **dadurch gekennzeichnet, daß** eine Umsetzung des zirkulierenden Reformats beim Abfahren erfolgt, bis sich ein Gleichgewicht in der Zusammensetzung des Gases eingestellt hat.

5. Verfahren nach Anspruch 4, **dadurch gekennzeichnet, daß** das Inertgas im wesentlichen Kohlendioxid und Stickstoff enthält.

6. Verfahren nach Anspruch 1, **dadurch gekennzeichnet, daß** bei Erreichen eines vorbestimmten Temperaturwerts in der Gasaufbereitungsanlage Wasser zugeführt wird.

7. Verfahren nach Anspruch 6, **dadurch gekennzeichnet, daß** die Ausgangsleitung der Gasaufbereitungseinheit nach der Zufuhr von Wasser für eine Zuleitung zu dem Brenner geöffnet wird.

8. Verfahren nach Anspruch 6, **dadurch gekennzeichnet, daß** die Ausgangsleitung der Gasaufbereitungseinheit nach Zufuhr von Wasser für eine Zuleitung zu einer Brennstoffzelle geöffnet wird.

## Claims

1. A method for operating a fuel cell heating device, comprising the following:
a quantity of gas circulates in the gas preparation unit during the startup and shutdown of the gas preparation unit, wherein the gas from the output line (36) of the gas preparation unit is conveyed to the input line (14) of the gas preparation unit, wherein the circulating quantity of gas in the gas preparation unit runs through a gas precision cleaning, which is connected with the output line (36) and with a fuel cell (32) via a valve (28), **characterized in that** during the startup of the gas preparation device an inert gas, which is obtained through conversion of the circulating reformate, circulates in the gas preparation system when heat is supplied.

2. The method according to claim 1, **characterized in that** during the shutdown of the gas preparation system while supplying air reformate circulates in the gas preparation unit until an inert gas has formed in the gas preparation unit.

3. The method according to claim 2, **characterized in that** the water formed during the air supply is discharged.

4. The method according to claim 2 or 3, **characterized in that** a conversion of the circulating reformate takes place during shutdown until an equilibrium is reached in the composition of the gas.

5. The method according to claim 4, **characterized in that** the inert gas mainly contains carbon dioxide and nitrogen.

6. The method according to claim 1, **characterized in that** water is supplied when a predetermined temperature is reached in the gas preparation system.

7. The method according to claim 6, **characterized in that** the output line of the gas preparation unit is opened after the supply of water for a supply line to the burner.

8. The method according to claim 6, **characterized in that** the output line of the gas preparation unit is opened after the supply of water for a supply line to a fuel cell.

## Revendications

1. Procédé pour faire fonctionner un appareil de chauffage à pile à combustible, présentant ce qui suit :
pendant la mise en marche et l'arrêt d'une unité de préparation du gaz, une quantité de gaz circule dans l'unité de préparation du gaz, le gaz étant alimenté de la conduite de sortie (36) de l'unité de préparation du gaz à la conduite d'entrée (14) de l'unité de préparation du gaz, la quantité de gaz circulant dans l'unité de préparation du gaz passant à travers une épuration fine du gaz, qui est connectée par une valve (28) à la conduite de sortie (36) et à une pile à combustible (32), **caractérisé en ce que** lors de la mise en marche de l'installation de préparation du gaz, un gaz inerte, obtenu par transformation du reformat circulant, circule dans l'installation de préparation du gaz sous apport de chaleur.

2. Procédé selon la revendication 1, **caractérisé en ce que** lors de l'arrêt de l'installation de préparation du gaz sous apport d'air, du reformat circule dans l'unité de préparation du gaz, jusqu'à ce qu'un gaz inerte se soit formé dans l'unité de préparation du gaz.

3. Procédé selon la revendication 2, **caractérisé en ce que** l'eau se formant lors de l'apport d'air est évacuée.

4. Procédé selon la revendication 2 ou 3, **caractérisé en ce qu'**une transformation du reformat circulant est effectuée lors de l'arrêt, jusqu'à ce qu'un équilibre se soit ajusté dans la composition du gaz.

5. Procédé selon la revendication 4, **caractérisé en ce que** le gaz inerte contient essentiellement du dioxyde de carbone et de l'azote.

6. Procédé selon la revendication 1, **caractérisé en ce que** lorsqu'une valeur de température prédéterminée est atteinte dans l'installation de préparation du gaz, de l'eau est alimentée.

7. Procédé selon la revendication 6, **caractérisé en ce que** la conduite de sortie de l'unité de préparation du gaz est ouverte après l'apport d'eau pour une conduite d'amenée vers le brûleur.

8. Procédé selon la revendication 6, **caractérisé en ce que** la conduite de sortie de l'unité de préparation du gaz est ouverte après apport d'eau pour une conduite d'amenée vers une pile à combustible.
